(19) Europäisches Patentamt
European Patent Office
Office européen des brevets

(11) **EP 4 214 497 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **21786749.8**

(22) Anmeldetag: **26.08.2021**

(51) Internationale Patentklassifikation (IPC):
**G01N 23/2208** (2018.01)

(52) Gemeinsame Patentklassifikation (CPC):
**G01N 23/2208;** G01N 2223/053; G01N 2223/072;
G01N 2223/079; G01N 2223/102; G01N 2223/402;
G01N 2223/418

(86) Internationale Anmeldenummer:
**PCT/AT2021/060297**

(87) Internationale Veröffentlichungsnummer:
**WO 2022/056562 (24.03.2022 Gazette 2022/12)**

(54) **COMPUTERGESTÜTZTES VERFAHREN ZUR BESTIMMUNG EINES ELEMENTANTEILES EINES BESTIMMUNGSELEMENTES KLEINER ORDNUNGSZAHL, INSBESONDERE EINES LI-ANTEILES, UND VORRICHTUNG ZUR DATENVERARBEITUNG HIERZU**

COMPUTER-ASSISTED METHOD FOR DETERMINING AN ELEMENT FRACTION OF A DETERMINATION ELEMENT HAVING A SMALL ATOMIC NUMBER, IN PARTICULAR A LI FRACTION, AND CORRESPONDING DEVICE FOR PROCESSING DATA

PROCÉDÉ ASSISTÉ PAR ORDINATEUR DE DÉTERMINATION D'UNE FRACTION D'ÉLÉMENT DE DÉTERMINATION À FAIBLE NUMÉRO ATOMIQUE, EN PARTICULIER D'UNE FRACTION LI, ET DISPOSITIF CORRESPONDANT DE TRAITEMENT DES DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2020 AT 507832020**

(43) Veröffentlichungstag der Anmeldung:
**26.07.2023 Patentblatt 2023/30**

(73) Patentinhaber: **Gatan, Inc.**
**Pleasanton, CA 94588 (US)**

(72) Erfinder: **ÖSTERREICHER, Johannes**
**5230 Mattighofen (AT)**

(74) Vertreter: **Wirnsberger & Lerchbaum**
**Patentanwälte OG**
**Mühlgasse 3**
**8700 Leoben (AT)**

(56) Entgegenhaltungen:
CA-C- 2 876 013          US-A- 4 476 386
US-A1- 2013 054 153      US-A1- 2016 245 762
US-B1- 9 899 185         US-B2- 8 222 598
US-B2- 9 752 997

**Beschreibung**

Die Erfindung betrifft ein computergestütztes Verfahren zur Bestimmung eines Elementanteiles eines Bestimmungselementes insbesondere mit kleiner Ordnungszahl, im Speziellen von Lithium, eines Untersuchungsbereiches einer mit Primärelektronen beschossenen Probe, wobei ein mit einem Rückstreuelektronendetektor aufgenommenes Rückstreuelektronensignal, bevorzugt ein Rückstreuelektronenbild, sowie eine mit einem Röntgenspektroskopiedetektor, wie einem EDX-Detektor, ermittelte Spektroskopieelementzusammensetzung des Untersuchungsbereiches erhalten sind, wobei ein aus dem Rückstreuelektronensignal ermittelter Messgrauwert mit Elementanteilen der Spektroskopieelementzusammensetzung kombiniert wird, um einen Anteil des Bestimmungselementes zu bestimmen.

Weiter betrifft die Erfindung eine Vorrichtung zur Datenverarbeitung.

Darüber hinaus betrifft die Erfindung ein Computerprogrammprodukt.

Aus dem Stand der Technik ist bekannt, dass mittels Elektronenmikroskopie sowohl eine Topografie als auch eine Elementzusammensetzung eines Untersuchungsbereiches einer Probe ermittelt werden können. Hierzu werden üblicherweise mit einer Elektronenkanone Primärelektronen auf den Untersuchungsbereich geschossen und anschließend mit einem Sekundärelektronendetektor inelastisch gestreute Elektronen, mit einem Rückstreuelektronendetektor (BSE-Detektor - back scattered electron detector) elastisch gestreute Elektronen und/oder mit einem Röntgenspektroskopiedetektor, üblicherweise einem EDX-Detektor (energy dispersive X-ray spectroscopy detector) oder einem WDX-Detektor (wavelength dispersive X-ray spectroscopy detector), emittierte Röntgenstrahlung detektiert. Durch ortsabhängige Darstellung kann basierend auf den detektierten Sekundärelektronen ein Grauwertbild einer Probenoberfläche des Untersuchungsbereiches erzeugt werden, welches geeignet ist, eine Topografie der Probenoberfläche zu repräsentieren, basierend auf den detektierten Rückstreuelektronen (BSE) ein Grauwertbild der Probenoberfläche erzeugt werden, welches geeignet ist, eine räumliche Verteilung von Elementen der Probenoberfläche darzustellen, und basierend auf der detektierten Röntgenstrahlung eine Elementzusammensetzung der Probenoberfläche bestimmt werden.

Eine Darstellung der räumlichen Elementverteilung mittels des Rückstreuelektronendetektors basiert in der Regel darauf, dass eine Ausbeute von Rückstreuelektronen von einer mittleren Kernladungszahl des Untersuchungsbereiches abhängt. Je höher die mittlere Kernladungszahl, desto höher ist eine Ausbeute von Rückstreuelektronen und umso heller ist ein entsprechender Grauwert im Grauwertbild.

Eine Bestimmung der Elementzusammensetzung mittels EDX basiert in der Regel darauf, dass detektierte Röntgenstrahlung energieabhängig dargestellt und charakteristische Röntgenstrahlungspeaks elementspezifisch zugeordnet werden. Hierbei ergibt sich in der Regel die Schwierigkeit, dass Elemente niedriger Ordnungszahl, meist Elemente mit einer Ordnungszahl kleiner fünf, also Elemente mit einer Ordnungszahl kleiner als jener von Bor, nicht mehr nachgewiesen werden können. Eine quantitative Analyse ist häufig erst für höhere Ordnungszahlen, häufig ab Ordnungszahl 7, durchführbar. Dies erklärt sich dadurch, dass charakteristische Röntgenstrahlung solcher Elemente mit kleiner Ordnungszahl sehr niederenergetisch ist und häufig sowohl in der Probe selbst als auch in Fenstern von Röntgenstrahlungsdetektoren absorbiert wird. Im Speziellen kann durch einen Einsatz von fensterlosen Röntgenstrahlungsdetektoren eine Nachweisgrenze zu niedrigeren Ordnungszahlen hin ausgedehnt werden, wobei in der Regel erzielbare Nachweisgrenzen höher als 20 Gew.-% bis 30 Gew.-% liegen. Ein Nachweis und insbesondere eine quantitative Bestimmung von Elementen niedriger Ordnungszahlen zeigt sich jedoch als grundsätzlich problematisch. Dies gilt im Besonderen für Elemente wie Lithium oder Beryllium.

Das Dokument US 9,899,185 B1 betrifft ein Verfahren zur Bestimmung einer Elementzusammensetzung, wobei ein EDX-Spektrum mit einer zusätzlichen Information eines Untersuchungsbereiches kombiniert wird, um auf diese Weise eine Differenzierung von einander überlappenden Röntgenpeaks im EDX-Spektrum zu ermöglichen.

Das Dokument US 4,476,386 A betrifft ein Verfahren zur Ermittlung einer Elementzusammensetzung mittels Röntgenspektroskopie, wobei an einer Probenposition ein Röntgensignal mit einem schmalen Energiespektrum in Relation zu einem Röntgensignal mit einem breiten Energiespektrum gesetzt wird, um einen normalisierten Anteil zu bestimmen, welcher zu einem Anteil eines bestimmten Elementes in einer Probe korrespondiert.

Hier setzt die Erfindung an. Aufgabe der Erfindung ist es, ein Verfahren der eingangs genannten Art anzugeben, mit welchem eine quantitative Bestimmung eines Bestimmungselementes, insbesondere eines Bestimmungselementes mit kleiner Ordnungszahl, praktikabel ermöglicht ist.

Weiter ist es ein Ziel, eine Vorrichtung der eingangs genannten Art anzugeben, mit welcher eine quantitative Bestimmung eines Bestimmungselementes, insbesondere eines Bestimmungselementes mit kleiner Ordnungszahl, praktikabel ermöglicht ist.

Zudem ist es ein Ziel, ein Computerprogrammprodukt der eingangs genannten Art anzugeben, mit welchem eine quantitative Bestimmung eines Bestimmungselementes, insbesondere eines Bestimmungselementes mit kleiner Ordnungszahl, praktikabel ermöglicht ist.

Die Aufgabe wird erfindungsgemäß durch ein Verfahren der eingangs genannten Art gelöst, wenn mit den Elementanteilen der Spektroskopieelementzusammensetzung ein Vergleichsgrauwert Sv berechnet wird und mit einem Vergleich, insbesondere einer Differenz, von Messgrauwert und Vergleichsgrauwert der Anteil des Bestimmungselementes bestimmt wird. Das Verfahren wird im Anspruch 1 beansprucht. Die Ansprüche 6 und 8 offenbaren bzw. eine erfindungsgemäße Vorrichtung und ein erfindungsgemäßes Computerprogrammprodukt.

Grundlage der Erfindung ist die Idee, eine Ordnungszahlabhängigkeit einer Ausbeute bzw. von Rückstreuekoeffizienten von Rückstreuelektronen zu nutzen, um eine fehlende Nachweisempfindlichket der Röntgenspektroskopie auszugleichen. Der Grauwert eines Rückstreuelektronenbildes bzw. eines oder mehrere dessen Pixel, auch als Messgrauwert bezeichnet, ist eine Funktion der mittleren Ordnungszahl des Untersuchungsbereiches der Probe. Elemente mit niedriger Ordnungszahl, wie beispielsweise Lithium oder Beryllium, verringern den Grauwert im Rückstreuelektronenbild im Vergleich zu einem Grauwertbild, in welchem diese Elemente nicht berücksichtigt sind. Indem die Spektroskopieelementzusammensetzung des Untersuchungsbereiches, also die mittels Röntgenspektroskopie ermittelte Elementzusammensetzung des Untersuchungsbereiches, mit dem Grauwert kombiniert wird, ist es ermöglicht, Elemente bzw. deren Anteile zu bestimmen, welche nicht oder nur marginal von der Spektroskopieelementzusammensetzung repräsentiert werden. Damit können im Besonderen Bestimmungselemente kleiner Ordnungszahl, insbesondere Bestimmungselemente mit einer Ordnungszahl kleiner als fünf, bevorzugt etwa Lithium oder Beryllium, quantitativ bzw. anteilsmäßig bestimmt werden. Dies ermöglicht eine einfache und praktikable Bestimmung eines oder mehrerer ansonsten gar nicht oder nur aufwendig ermittelbarer Bestimmungselementanteile.

Es versteht sich, dass fachüblich und entsprechend in diesem Dokument Grauwert bzw. Messgrauwert als Synonym für einen Helligkeitswert bzw. Intensitätswert verwendet wird, welcher eine Helligkeit bzw. Intensität eines Messsignals bzw. des Rückstreustreuelektronensignals, in der Regel eines oder mehrerer Pixel eines Bildes, bezeichnet. Die Bezeichnung Grauwert ist im Besonderen unabhängig von einer bestimmten Farbgebung zu sehen und kann grundsätzlich mit beliebigen Farben kombiniert sein. Ein Grauwert kann dabei ein mittlerer bzw. gemittelter Grauwert mehrerer anderer Grauwerte sein. In der Regel ist zwar vorgesehen, dass mit dem vom Rückstreuelektronendetektor aufgenommenen Rückstreuelektronensignal ein Rückstreuelektronenbild erzeugt wird, weshalb eine Intensität des Rückstreuelektronensignals üblicherweise als Grauwert bzw. Messgrauwert bezeichnet wird. Die Erzeugung eines Rückstreuelektronenbildes mit bzw. aus dem Rückstreuelektronensignal ist jedoch nicht zwingend erforderlich. Das Rückstreuelektronensignal bzw. dessen Messgrauwert kann beispielsweise alternativ oder kumulativ zur Messung von einzelnen Punkten oder Linien des Untersuchungsbereiches genutzt werden.

Praktikabel ist es, wenn eine Kombination zwischen Messgrauwert und den Elementanteilen der Spektroskoskopieelementzusammensetzung mit Rückstreukoeffizienten der Elementanteile erfolgt. Üblicherweise bezeichnet Rückstreukoeffizient fachüblich ein Verhältnis von zwischen einem Oberflächenbereich bzw. Untersuchungsbereich ausgehenden Rückstreuelektronen und auf die Oberfläche auftreffenden Primärelektronen. Rückstreukoeffizienten können aus der Literatur entnommen werden und/oder simuliert und/oder mit Kalibrationsmessungen ermittelt werden. Ein Grauwert S eines Rückstreuelektronensignals bzw. Rückstreuelektronenbildes korreliert mit dem Rückstreukoeffizienten $\eta$, insbesondere einem mittleren bzw. gemittelten Rückstreukoeffizienten $\bar{\eta}$. Der Rückstreukoeffizient ist dabei eine Funktion der Ordnungszahl Z. Entsprechend kann für Mischungen von Elementen der mittlere Rückstreukoeffizient $\bar{\eta}$ zum Beispiel als:

$$\bar{\eta} = \sum_{i=1}^{n} c_i \eta_i$$

angegeben werden, wobei $c_i$ einen Gewichtsanteil und $\eta_i$ einen Rückstreukoeffizienten für ein Element i bezeichnet. Basierend auf bekannten elementspezifischen Rückstreukoeffizienten ist somit eine Zuordnung zu Grauwerten eines Rückstreuelektronensignals bzw. Rückstreuelektronenbildes durchführbar bzw. können Grauwertbeiträge von Elementen zu einem solchen Grauwert kumuliert werden. Zweckmäßig kann somit ein jeweiliger Rückstreukoeffizient eines Elementes der Spektroskopieelementzusammensetzung verwendet werden, um eine Kombination zwischen dem Messgrauwert und der Spektroskopieelementzusammensetzung bzw. der Elementanteile deren Elemente umzusetzen.

Erfindungsgemäß ist vorgesehen, dass mit den Elementanteilen der Spektroskopieelementzusammensetzung ein Vergleichsgrauwert berechnet wird und mit einem Vergleich, insbesondere einer Differenz, von Messgrauwert und Vergleichsgrauwert ein Anteil des Bestimmungselementes bestimmt wird. Indem einerseits aus dem Rückstreuelektronensignal ein Messgrauwert und andererseits mit mittels Röntgenspektroskopie ermittelten Elementanteilen ein Vergleichsgrauwert berechnet wird, kann auf einfache Weise aus einem Vergleich dieser ein Anteil des Bestimmungselementes bestimmt werden, welcher in der Spektroskopieelementzusammensetzung bzw. Elementanteilen dieser nicht oder nur marginal ausgeprägt vorhanden ist bzw. nicht von dieser repräsentiert wird.

Für eine hohe Praktikabilität hat es sich bewährt, wenn der Vergleich von Messgrauwert und Vergleichsgrauwert mit einer Differenz dieser umgesetzt wird. Kumulativ oder alternativ können diese aber auch mit einer Anteilsbildung bzw. Verhältnisbildung oder einer sonstigen fachüblichen mathematischen Vergleichsmethode bzw. Kombinationsmethode in Zusammenhang gesetzt werden.

Zweckmäßig ist es, wenn der Vergleichsgrauwert mit jeweiligen Rückstreukoeffizienten der Elementanteile der Spektroskopieelementzusammensetzung ermittelt wird. Dies ermöglicht eine besonders praktikable Berechnung des Vergleichsgrauwertes.

Üblicherweise ist der Messgrauwert ein mittlerer bzw. gemittelter Messgrauwert und gegebenenfalls der Vergleichsgrauwert ein mittlerer bzw. gemittelter Vergleichsgrauwert. Eine Mittelung erfolgt dabei in der Regel über den Untersuchungsbereich und/oder die detektierten Elemente.

Für eine hohe Genauigkeit ist es günstig, wenn eine oder mehrere Kalibrationsproben mit dem Rückstreuelektronendetektor vermessen sind bzw. werden, um bestimmten Elementen bzw. Elementanteilen bzw. Elementzusammensetzungen bestimmte Grauwerte, insbesondere Grauwertbeiträge, zuzuordnen. Damit kann ein Zusammenhang und damit die Kombination zwischen Messgrauwert und Spektroskopieelementzusammensetzung präzisiert werden. Insbesondere können damit der Vergleichsgrauwert und/oder Rückstreukoeffizienten praktikabel ermittelt werden. Vorteilhaft können auf diese Weise messsystemabhängige Einflüsse berücksichtigt werden. Es versteht sich, dass die den Elementen bzw. Elementzusammensetzungen zugeordneten Grauwerte in der Regel mittlere bzw. gemittelte Grauwerte sind. Als Kalibrationsproben, auch als Kalibrationsstandards bezeichnet, werden üblicherweise Proben mit bekannter Zusammensetzung, insbesondere einelementige Kalibrationsproben, in der Regel mit möglichst hoher Reinheit, verwendet. Damit ist ein korrelativer Zusammenhang zwischen bestimmten Elementen bzw. Elementzusammensetzungen und dem Vergleichsgrauwert bzw. einem Beitrag zu diesem einfach herstellbar.

In analoger Weise ist es entsprechen von Vorteil, wenn zumindest eine mit bzw. aus dem Bestimmungselement gebildete Kalibrationsprobe mit dem Rückstreuelektronendetektor vermessen ist bzw. wird, um dem Bestimmungselement bzw. einem Bestimmungselementanteil einen Grauwert, insbesondere Grauwertbeitrag, zuzuordnen. Damit kann der Anteil des Bestimmungselementes besonders präzise bestimmt werden. Dies ermöglicht eine präzisierte Kombination zwischen Messgrauwert und Spektroskopieelementzusammensetzung. Insbesondere kann damit ein zugehöriger Rückstreukoeffizient, insbesondere unter Berücksichtigung von messsystemabhängigen Einflüssen, praktikabel ermittelt werden. Es versteht sich, dass es sich dabei in der Regel um einen mittleren Grauwert bzw. Grauwertbeitrag handelt. Alternativ oder kumulativ kann es günstig sein, wenn eine Zuordnung eines Grauwertes bzw. Grauwertbeitrags zu einem Bestimmungselementanteil mittels Simulation, insbesondere Monte-Carlo-Simulation, durchgeführt wird.

Bei einer Vermessung von vorgenannten Kalibrationsproben wird in der Regel ein Grauwert S als Funktion einer Ordnungszahl Z, also S über Z, ermittelt bzw. eine entsprechende Kalibrationskurve gebildet. Hierbei können nicht-lineare Zusammenhänge entstehen, welche eine Kalibration erschweren. Günstig ist es, wenn bei einer solchen Kalibration bzw. Vermessen von Kalibrationsproben ein Verhältnis von Grauwert S und Rückstreukoeffizient $\eta$ als Funktion der Ordnungszahl Z, also $(\wedge)$ über Z, ermittelt wird. Damit kann die Kalibration vereinfacht und vorteilhaft eine hohe Präzision bei einer Auswertung des Bestimmungselementes gewährleistet werden.

Bewährt hat es sich, wenn der Rückstreuelektronendetektor bei einer Vermessung einer der vorgenannten Kalibrationsproben derart betrieben wird, dass Kontrast und/oder Helligkeit des ermittelten Grauwertes in einem Bereich von 20 % bis 80 %, insbesondere 30 % bis 70 %, bevorzugt 40 % bis 60 %, eines maximalen Kontrastwertes bzw. Helligkeitswertes eines zugehörigen Grauwertspektrums liegen. Dies kann meist mit den Betriebsparametern des Rückstreuelektronendetektors eingestellt werden.

Üblicherweise ist vorgesehen, dass der Untersuchungsbereich der Probe mit einem Primärelektronenstrahl beschossen wird und mit einem Rückstreuelektronendetektor vom Untersuchungsbereich rückgestreute Elektronen detektiert werden, um das Rückstreuelektronensignal bzw. Rückstreuelektronenbild aufzunehmen, und vom Untersuchungsbereich emittierte Röntgenstrahlen mit einem Röntgenspektroskopiedetektor, wie einem EDX-Detektor und/oder einem WDX-Detektor, detektiert werden, um die Spektroskopieelementzusammensetzung zu ermitteln. Dies ermöglicht eine praktikable Messung, insbesondere mit einem Standardverfahren wie beispielsweise Elektronenmikroskopie, im Besonderen Rasterelektronenmikroskopie oder Transmissionselektronenmikroskopie. Eine Detektion mit dem Rückstreuelektronendetektor und eine Detektion mit dem Röntgenspektroskopiedetektor können zeitparallel oder zeitlich nacheinander erfolgen.

Günstig ist es, wenn eine Detektion mit dem Rückstreuelektronendetektor und eine Detektion mit dem Röntgenspektroskopiedetektor im Wesentlichen zeitparallel durchgeführt wird. Dies ermöglicht eine fehlerarme Messung und entsprechend vorteilhaft eine präzise Bestimmung des Bestimmungselementanteiles.

Grundsätzlich kann eine Detektion mit dem Rückstreuelektronendetektor und eine Detektion mit dem Röntgenspektroskopiedetektor bei gleichen oder unterschiedlichen Primärelektronenstrahlspannungen zur Beschleunigung der Primärelektronen durchgeführt werden. Rückstreuelektronen und Röntgenstrahlen weisen in der Regel unterschiedliche Interaktionsvolumen auf, also unterschiedliche Volumenbereiche der Probe aus welchen die Rückstreuelektronen bzw. Röntgenstrahlen emittiert werden. In der Regel ist das Interaktionsvolumen der Röntgenstrahlung dabei größer als jenes der Rückstreuelektronen. Um diese auszugleichen ist es zweckmäßig, wenn eine Detektion mit dem Rückstreuelektronendetektor und eine Detektion mit dem Röntgenspektroskopiedetektor bei unterschiedlichen Primärelektronenstrahlspannungen zur Beschleunigung der Primärelektronen durchgeführt wird. In der Regel wird die Detektion mit dem Rückstreuelektronendetektor bei einer höheren Primärelektronenstrahlspannung als die Detektion mit dem Röntgenspektroskopiedetektor durchgeführt. Bewährt hat es sich, wenn die jeweilige Primärelektronenstrahlspannung so gewählt wird, dass eine Interaktionsvolumtiefe des Interaktionsvolumens bei einer Detektion mit dem Rückstreuelektronendetektor und eine Interaktionsvolumtiefe des Interaktionsvolumens bei einer Detektion mit dem Röntgenspektroskopiedetektor für zumindest ein 70. Perzentile, insbesondere zumindest ein 80. Perzentile, bevorzugt zumindest ein 90. Perzentile, besonders bevorzugt zumindest ein 95. Perzentile, der jeweiligen Interaktionsvolumtiefe im Wesentlichen gleich groß sind. In der Regel können die Messungen dann zwar nicht zeitparallel durchgeführt werden, allerdings ermöglicht eine Abstimmung der Interaktionsvolumina vorteilhaft eine besonders hohe Genauigkeit bei der Bestimmung des Anteiles des Bestimmungselementes. Günstig kann es sein, wenn die jeweiligen Primärelektronenstrahlspannungen mittels Simulation, insbesondere einer Monte-Carlo-Simulation, ermittelt wird. Dadurch können die Interaktionsvolumen besonders gut aufeinander abgestimmt werden. Im speziellen Fall, dass eine zu untersuchende Materialstruktur größer ist als ein Interaktionsvolumen bei einer Detektion mit dem Röntgenspektroskopiedetektor, können in der Regel etwa gleich große Primärelektronenstrahlspannungen verwendet werden.

Von Vorteil ist es, wenn das Verfahren ausgebildet ist, um einen Anteil von Lithium oder Beryllium zu bestimmen bzw. dieses als Bestimmungselement vorgesehen ist. Durch eine Kombination bzw. einen Vergleich von Messgrauwert und Spektroskopieelementzusammensetzung bzw. insbesondere Vergleichsgrauwert können diese Elemente bzw. deren Anteile praktikabel und aufwandsarm, insbesondere im Rahmen einer elektronenmikroskopischen Untersuchung, bestimmt werden. Besonders gilt dies für Lithium, welches mit fachüblichen Methoden nur unter großem Aufwand insbesondere quantitativ bestimmbar ist.

Bewährt hat es sich, wenn der Anteil x des Bestimmungselementes berechnet wird, indem eine Differenz von Messgrauwert $S_M$ und Vergleichsgrauwert $S_V$ in ein Verhältnis zum Vergleichsgrauwert gesetzt wird, also:

$$x = \frac{S_M - S_V}{S_V}$$

. Eine besonders hohe Präzision ist erreichbar, wenn außerdem noch ein elementspezifischer Bestimmungselementgrauwert $S_B$ berücksichtigt wird, indem die Differenz von Messgrauwert $S_M$ und Vergleichsgrauwert $S_V$ in ein Verhältnis zu einer Differenz des Bestimmungselementgrauwertes und des Vergleichsgrauwertes gesetzt wird, also:

$$x = \frac{S_M - S_V}{S_B - S_V}$$

. Der Bestimmungselementgrauwert kann mittels vorgenannter Kalibration und/oder einer Simulation, insbesondere einer Monte-Carlo-Simulation bestimmt werden. Häufig ist es jedoch ausreichend, wenn dieser näherungsweise mit Null angenommen wird. Üblicherweise sind dabei der Messgrauwert bzw. Vergleichsgrauwert bzw. Bestimmungselementgrauwert als gemittelte Werte angegeben.

Günstig ist es, wenn eine Verteilung des Bestimmungselementes entlang einer Fläche der Probe bzw. des Untersuchungsbereiches angegeben bzw. dargestellt wird. Im Besonderen kann dadurch, insbesondere iterativ, der Untersuchungsbereich bzw. dessen Erstreckung angepasst werden, um eine Präzision der Messung bzw. Bestimmungselementermittlung zu erhöhen. Bevorzug kann dies im Rahmen eines Element-Mappings erfolgen.

Das Ziel wird erfindungsgemäß mit einer Vorrichtung zur Datenverarbeitung der eingangs genannten Art erreicht, wenn die Vorrichtung Mittel, wie zumindest einen Prozessor, umfasst, welche angepasst sind, das Verfahren nach einem vorgenannten Verfahren auszuführen, insbesondere auf beschriebenen Weise eine Kombination zwischen aus dem Rückstreuelektronen ermitteltem Messgrauwert und Spektroskopieelementzusammensetzung durchzuführen, um einen Anteil des Bestimmungselementes zu bestimmen. bzw. im Besonderen einerseits aus dem Rückstreuelektronensignal, insbesondere Rückstreuelektronenbild, einen Messgrauwert zu berechnen und andererseits mit Elementanteilen der Spektroskopieelementzusammensetzung einen Vergleichsgrauwert zu berechnen und danach mit einem Vergleich von Messgrauwert und Vergleichsgrauwert einen Anteil des Bestimmungselementes zu bestimmen. Analog vorgenannten Vorteilen und Wirkungen kann auf diese Weise eine praktikable Bestimmung eines Anteiles des Bestimmungselementes durchgeführt werden. Üblicherweise weist die Vorrichtung einen oder mehrere Prozessoren auf bzw. ist mit einem oder als Computer ausgebildet. Bewährt hat es sich, wenn die Vorrichtung als Teil eines Elektronenmikroskops ausgebildet ist bzw. an ein solches zur Datenübertragung gekoppelt ist. Dies ermöglicht eine besonders praktikable Bestimmung des Bestimmungselementes bzw. dessen Anteiles. Das Elektronenmikroskop kann dabei beispielsweise als Rasterelektronenmikroskop oder Transmissionselektronenmikroskop ausgebildet sein. Es versteht sich, dass das Verfahren zur Bestimmung eines Elementanteiles dabei üblicherweise im Rahmen einer elektronenmikroskopischen Messung umgesetzt ist bzw. wird. Das Elektronenmikroskop weist vorteilhaft einen Rückstreuelektronendetektor zur Aufnahme eines Rückstreuelektronensignals, insbesondere Rückstreuelektronenbildes, und einen Röntgenspektroskopiedetektor zur Ermittlung einer Spektroskopieelementzusammensetzung eines Untersuchungsbereiches einer Probe auf.

Im Falle eines Transmissionselektronenmikroskops (TEM) findet aufgrund dessen Aufbauprinzips in der Regel eine ordnungszahlabhängige Elektronenstreuung im Wesentlichen in Richtung einer Schussrichtung der Primärelektronen bzw. in einer die Probe durchdringenden Richtung der Primärelektronen statt. Entsprechend korrespondieren im speziellen Fall eines Transmissionselektronenmikroskops die Probe durchdringende Elektronen, welche geeignet sind, einen Ordnungszahlkontrast zu bewirken, mit Rückstreuelektronen im Sinne dieses Dokumentes und sind im Speziellen als von der Bezeichnung Rückstreuelektronen umfasst bzw. mitgemeint zu sehen. Entsprechend ist in diesem Fall ein Elektronendetektor, welcher solche zur Erzeugung eines Ordnungszahlkontrasts geeigneten Elektronen detektiert, im Sinne dieses Dokumentes im Speziellen als von der Bezeichnung Rückstreuelektronendetektor umfasst bzw. mitgemeint zu sehen. Im Falle eines Transmissionselektronenmikroskops hat sich als Rückstreuelektronendetektor im Besonderen ein High-Angular-Darkfield-Detektor (HAADF-Detektor) als günstig erwiesen, wobei Elektronen, in der Regel konzentrisch um eine optische Achse des Transmissionselektronenmikroskops, an einer von einer Primärelektronenquelle des Transmissionselektronenmikroskops abgewandten Seite der Probe detektiert werden. Ein Ordnungszahlkontrast skaliert dabei in der Regel mit einem Quadrat der Ordnungszahl.

Das weitere Ziel wird erfindungsgemäß mit einem Computerprogrammprodukt der eingangs genannten Art erreicht, wenn das Computerprogrammprodukt Befehle, die bei Ausführung des Computerprogrammproduktes durch einen Computer bzw. vorgenannter Vorrichtung zur Datenverarbeitung diese veranlassen, das Verfahren zur Bestimmung eines Elementanteiles auszuführen, insbesondere auf beschriebenen Weise eine Kombination zwischen aus dem Rückstreuelektronen ermitteltem Messgrauwert und Spektroskopieelementzusammensetzung durchzuführen, um einen Anteil des Bestimmungselementes zu bestimmen. bzw. im Besonderen einerseits aus dem Rückstreuelektronensignal, insbesondere Rückstreuelektronenbild, einen Messgrauwert zu berechnen und andererseits mit Elementanteilen der Spektroskopieelementzusammensetzung einen Vergleichsgrauwert zu berechnen und danach mit einem Vergleich von Messgrauwert und Vergleichsgrauwert einen Anteil des Bestimmungselementes zu bestimmen. Analog vorgenannten Vorteilen und Wirkungen kann auf diese Weise eine praktikable Bestimmung eines Anteiles des Bestimmungselementes durchgeführt werden. Zweckmäßig ist es, wenn das Computerprogrammprodukt als Teil der Vorrichtung zur Datenverarbeitung ausgebildet bzw. auf dieser bestimmungsgemäß installiert ist.

Es versteht sich, dass das erfindungsgemäße Computerprogrammprodukt entsprechend bzw. analog den Merkmalen, Vorteilen und Wirkungen, welche im Rahmen eines, insbesondere vorstehenden, Verfahrens zur Bestimmung eines Elementanteiles beschrieben sind, ausgebildet sein kann.

Mit Vorteil ist ein computerlesbares Speichermedium vorgesehen, auf dem das Computerprogrammprodukt gespeichert ist. Dies ermöglich eine praktikable Ausführung des Computerprogrammproduktes bzw. Durchführung des Verfahrens zur Bestimmung eines Elementanteiles. Das Speichermedium kann als flüchtiges oder nicht-flüchtiges Speichermedium ausgebildet sein. Das Speichermedium kann zweckmäßig als Teil vorgenannter Vorrichtung zur Datenverarbeitung ausgebildet sein.

Weitere Merkmale, Vorteile und Wirkungen ergeben sich aus den nachfolgend dargestellten Ausführungsbeispielen. In den Zeichnungen, auf welche dabei Bezug genommen wird, zeigen:

Fig. 1 eine schematische Darstellung eines konzeptionellen Ablaufes eines Verfahrens zur Bestimmung eines Anteiles von Lithium als Bestimmungselement;

Fig. 2 eine Darstellung eines Rückstreuelektronenbildes einer LX410-Legierungsprobe;

Fig. 3 eine Darstellung eines Rückstreuelektronenbildes einer LSX2021-Legierungsprobe;

Fig. 4 und Fig. 5 mit Kalibrierationsstandards ermittelte Kalibrationskurven.

Ein Grauwert eines Rückstreuelektronenbildes, bezeichnet als Messgrauwert $S_M$, einer Oberfläche einer Probe ist eine Funktion einer mittleren Ordnungszahl der Oberfläche der Probe. Elemente mit niedriger Ordnungszahl, wie beispielsweise Lithium, verringern den Grauwert. Durch Berechnung eines Vergleichsgrauwertes Sv basierend auf einer mittels Röntgenspektroskopie ermittelten Elementzusammensetzung der Oberfläche, in welcher mangels Sensitivität der Röntgenspektroskopie für Lithium, Lithium nicht repräsentiert ist, kann durch Kombination des Messgrauwertes $S_M$ des Rückstreuelektronenbildes mit dem Vergleichsgrauwert Sv der Li-Gehalt der Oberfläche der Probe bestimmt werden. Der Messgrauwert $S_M$ und Vergleichsgrauwert Sv sind dabei üblicherweise jeweils als gemittelter Wert angegeben. Das Rückstreuelektronenbild, fachüblich bezeichnet als BSE-Bild, wird üblicherweise mit einem Rückstreuelektronendetektor bzw. BSE-Detektor aufgenommen. Die Elementzusammensetzung der Oberfläche wird in der Regel mittels energiedispersiver Röntgenspektroskopie, bezeichnet als EDX, bestimmt.

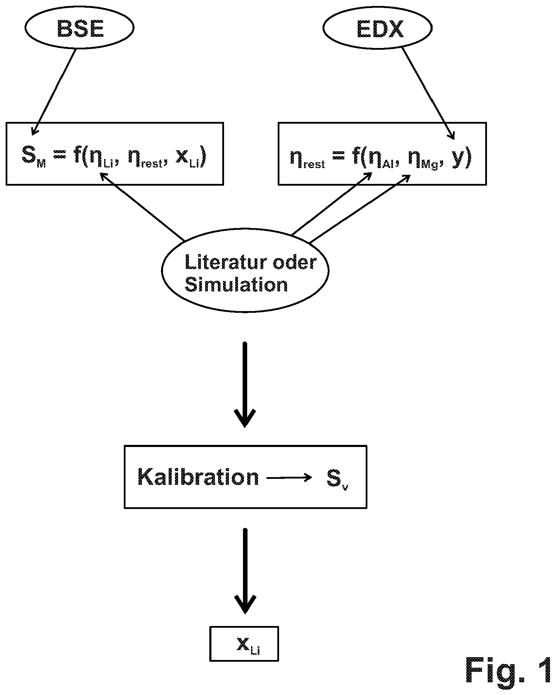

Fig. 1 zeigt ein konzeptionelles Grundkonzept exemplarisch für eine ternäre Mg-Li-Al-Legierung. Einem Rückstreuelektronenbild (BSE-Bild) eines Untersuchungsbereiches einer Probe kann ein Grauwert $S_M$ mit $S_M = f(\eta_{Li}, \eta_{rest}, x_{Li})$ zugeordnet werden, mit einem Rückstreukoeffizienten $\eta_{Li}$ für Li und einem Rückstreukoeffizienten $\eta_{rest}$ für eine Mischung von Mg und Al in einem Verhältnis y. Dabei bezeichnet $x_{Li}$ das Verhältnis von Li zu dieser Mischung aus Mg und Al. Weiter gilt $\eta_{rest} = f(\eta_{Al}, \eta_{Mg}, y)$ mit Rückstreukoeffizienten $\eta_{Al}$ und $\eta_{Mg}$ für Al und Mg. Die Rückstreukoeffizienten $\eta_{Al}$, $\eta_{Mg}$ und $\eta_{Li}$ können aus der Literatur entnommen oder mittels Simulation ermittelt werden. y kann mittels Röntgenspektroskopie bestimmt und $S_M$ aus dem Rückstreuelektronenbild ermittelt werden. Mit Ermittlung eines Vergleichsgrauwertes Sv aus mittels EDX ermittelten Anteilen von Al und Mg kann ein funktioneller Zusammenhang mathematisch aufgelöst werden. Dies kann vorzugsweise mit Rückstreuelektronenbildern von Kalibrationsstandards erfolgen, um den Vergleichsgrauwert Sv präzise zu bestimmen.

Damit kann $x_{Li}$ berechnet werden und somit ein Anteil von Li in der untersuchten Probenoberfläche bestimmt werden.

Im Folgenden wird eine Bestimmung eines Anteiles von Lithium als Bestimmungselement anhand von zwei Mg-Li-basierten Legierungen LAX410 und LSX2021 exemplarisch dargestellt. Hierzu wurden jeweils ein Rückstreuelektronenbild eines Untersuchungsbereiches, fachüblich bezeichnet als ROI bzw. Region-of-Interest, von Legierungsproben der jeweiligen Legierung sowie mittels energiedispersiver Röntgenspektroskopie bzw. EDX eine Spektroskopieelementzusammensetzung des jeweiligen Untersuchungsbereiches bestimmt. Die nominalen Zusammensetzungen von LAX410 und LSX2021 sind in Gew.--% in Tabelle 1 dargestellt. Die Legierungsproben wurden mit einem elektrischen Induktionsofen unter Argon-Schutzgas-Atmosphäre hergestellt. Zur Untersuchung der Legierungsproben wurde ein Feldemissions-Rasterelektronenmikroskop eingesetzt, wobei für EDX ein Siliziumdriftdetektor und zur Aufnahme des Rückstreuelektronenbildes ein Vier-Quadranten-Halbleiterdetektor eingesetzt wurde.

Tabelle 1: Nominale Zusammensetzung von LAX410 und LSX2021 in Gew.-%.

|  | **Mg** | **Li** | **Al** | **Si** | **Ca** |
|---|---|---|---|---|---|
| **LAX410** | Rest | 4,0 | 0,8 | - | 0,3 |
| **LSX2021** | Rest | 20,0 | - | 2,0 | 1,0 |

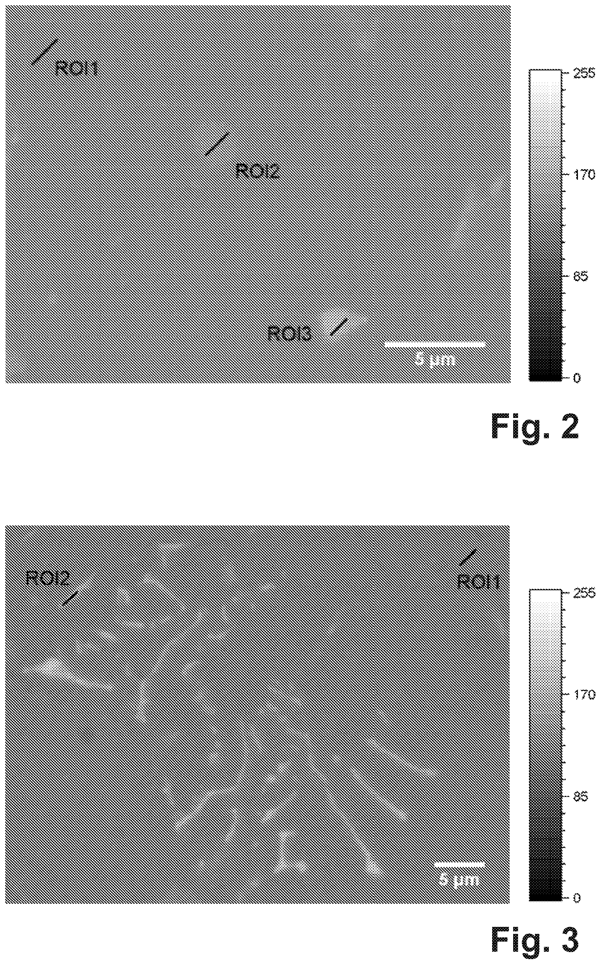

Fig. 2 zeigt ein Rückstreuelektronenbild einer LAX410-Legierungsprobe, wobei drei Untersuchungsbereiche, bezeichnet mit ROI 1, ROI 2 und ROI 3, markiert sind, welche hinsichtlich deren Elementezusammensetzung näher untersucht wurden. In entsprechender Weise zeigt Fig. 3 ein Rückstreuelektronenbild einer LSX2021-Legierungsprobe, wobei zwei Untersuchungsbereiche, ROI 1 und ROI 2, markiert sind. Die Rückstreuelektronenbilder sind hierbei als Grauwertbilder mit einem Grauwertspektrum von 0 bis 255 ausgebildet.

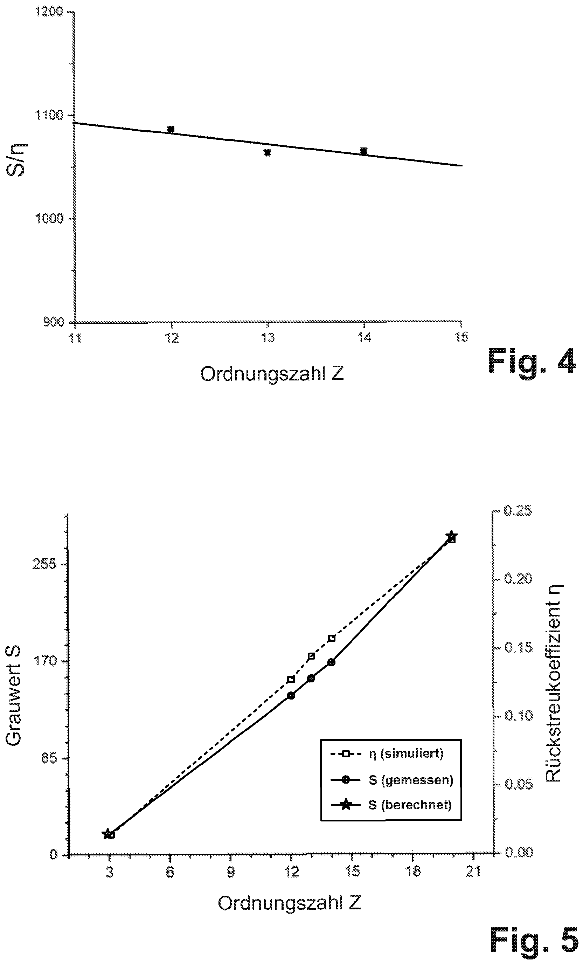

Um basierend auf der mittels EDX ermittelten Elementezusammensetzung, auch bezeichnet als Spektroskopieelementzusammensetzung, der jeweiligen Untersuchungsbereiche einen jeweiligen mittleren Vergleichsgrauwert $\overline{S}_V$ zu berechnen, wurden Kalibrationsproben, gebildet aus im Wesentlichen reinem Al, Mg bzw. Si vermessen. Zugehörige Kalibrationskurven mit gemessenen Kalibrationsgrauwerten S und mittels Simulation ermittelten Rückstreukoeffizienten $\eta$ sind in Fig. 4 und Fig. 5 dargestellt. Zweckmäßig ist hierbei in Fig. 4 ein Verhältnis des Kalibrationsgrauwertes S und Rückstreukoeffizienten $\eta$ über der Ordnungszahl Z dargestellt, um einen linearen Zusammenhang zwischen dem Kalibrationsgrauwert und der Ordnungszahl zu bilden. Fig. 5 stellt sowohl Grauwerte S als auch Rückstreukoeffizienten über der Ordnungszahl Z dar, wobei für Li ein berechneter Grauwert über der Ordnungszahl Z angegeben ist. In Tabelle 2 ist die mittels EDX gemessene Spektroskopieelementzusammensetzung, gebildet aus Mg, Al und Ca, der jeweiligen Untersuchungsbereiche für die LAX410-Legierungsprobe und in Tabelle 3 jene für die LSX2021-Legierungsprobe, gebildet aus Mg, Si und Ca, angegeben. Weiter sind in Tabelle 3 und Tabelle 4 der jeweilige aus der Spektroskopieelementzusammensetzung berechnete mittlere Vergleichsgrauwert $\overline{S}_V$ sowie ein mittlerer Messgrauwert $\overline{S}_M$ des jeweiligen Untersuchungsbereiches des zugehörigen Rückstreuelektronenbildes angegeben.

$$x = \frac{\overline{S}_M - \overline{S}_V}{\overline{S}_B - \overline{S}_V}$$

Basierend auf der Formel wurde damit der Anteil x von Li im jeweiligen Untersuchungsbereich berechnet, wobei $\overline{S}_M$ einen mittleren Messgrauwert, $\overline{S}_V$ einen mittleren Vergleichsgrauwert und $\overline{S}_B$ einen mittleren Bestimmungselementgrauwert, in diesem Fall jenen für Li, bezeichnet.

Tabelle 2: Für LAX410: Mittels Röntgenspektroskopie ermittelte Anteile von Mg, Al und Ca in Gew.-%; mittlerer Messgrauwert $\overline{S}_M$ des Rückstreuelektronenbildes; berechneter mittlerer Vergleichsgrauwert $\overline{S}_V$ sowie berechneter Anteil von Li in Gew.-%.

|  | **ROI 1** | **ROI 2** | **ROI 3** |
|---|---|---|---|
| Mg | 99,3 | 84,1 | 60,6 |
| Al | 0,6 | 8,2 | 18,1 |
| Ca | 0,2 | 7,7 | 21,3 |
| $\overline{S}_V$ (calculated) | 139 | 151 | 171 |
| $\overline{S}_M$ (measured) | 136 | 148 | 178 |
| **Li** **(calculated)** | 2,8 | 2,2 | - |

Tabelle 3: Für LSX2021: Mittels Röntgenspektroskopie ermittelte Anteile von Mg, Si und Ca in Gew.-%; mittlerer Messgrauwert $S_M$ des Rückstreuelektronenbildes; berechneter mittlerer Vergleichsgrauwert $\overline{S}_V$ sowie berechneter Anteil von Li in Gew.-%.

| | ROI 1 | ROI 2 |
|---|---|---|
| Mg | 98,5 | 69,8 |
| Si | 0,5 | 13,1 |
| Ca | 0,9 | 17,2 |
| $\overline{S}_V$ (calculated) | 140 | 167 |
| $\overline{S}_M$ (measured) | 119 | 169 |
| **Li (calculated)** | 17,5 | - |

Wie in Tabelle 2 und Tabelle 3 ersichtlich wurde für die ROI 1 der Legierungsproben ein Li-Anteil von 2,8 Gew.-% bzw. 17,5 Gew.-% bestimmt. Sowohl bei der LAX410-Legierungsprobe als auch LSX2021-Legierungsprobe betrifft die ROI 1 einen Matrixbereich der jeweiligen Legierungsmorphologie. Die bestimmten Li-Anteile der ROI 1 liegen etwas niedriger, allerdings sehr nahe, an den nominalen Li-Anteilen gemäß Tabelle 1. Wie in Tabelle 2 und Tabelle 3 ersichtlich weisen die ROI 2 der LAX410-Legierungsprobe und LSX2021-Legierungsprobe etwas höhere berechnete mittlere Vergleichsgrauwerte $\overline{S}_V$ als mittlere Messgrauwerte $\overline{S}_M$ auf, was einen Mangel von Li anzeigt. Für ROI 2 der LAX410-Legierungsprobe wurde der Li-Anteil mit 2,2 Gew.-% bestimmt. Die zugehörige Gefügestruktur scheint eine dendritische Struktur mit Li-freien intermetallischen Verbindungen, wie $Al_2Ca$- oder $Mg_2Ca$-Laves-Phasen, und einer mit Li gebildeten Matrix aufzuweisen. Der ROI 3 der LAX410-Legierungsprobe ist im Wesentlichen Li-frei ausgebildet.

Es zeigt sich somit, dass mit dem erfindungsgemäßen Verfahren eine quantitative Bestimmung von Elementen kleiner Ordnungszahl, im Besonderen von Lithium, mit hoher Genauigkeit ermöglicht ist, indem Rückstreuelektronensignale, insbesondere Rückstreuelektronenbilder, und Röntgenspektroskopiemessergebnisse synergetisch kombiniert werden. Vorteilhaft ist dabei ein Bindungszustand des Bestimmungselementes von untergeordneter Rolle, da üblicherweise eine Rückstreuung bzw. ein Rückstreukoeffizient von Rückstreuelektronen vom Atomkern des jeweiligen Elementes dominiert wird.

**Patentansprüche**

1. Computergestütztes Verfahren zur Bestimmung eines Elementanteiles eines Bestimmungselementes insbesondere mit kleiner Ordnungszahl, im Speziellen von Lithium, eines Untersuchungsbereiches einer mit Primärelektronen beschossenen Probe, wobei ein mit einem Rückstreuelektronendetektor aufgenommenes Rückstreuelektronensignal, bevorzugt ein Rückstreuelektronenbild, sowie eine mit einem Röntgenspektroskopiedetektor, wie einem EDX-Detektor, ermittelte Spektroskopieelementzusammensetzung des Untersuchungsbereiches erhalten sind, wobei ein aus dem Rückstreuelektronensignal ermittelter Messgrauwert $S_M$ mit Elementanteilen der Spektroskopieelementzusammensetzung kombiniert wird, um einen Anteil des Bestimmungselementes zu bestimmen, **dadurch gekennzeichnet, dass** mit den Elementanteilen der Spektroskopieelementzusammensetzung ein Vergleichsgrauwert Sv berechnet wird und mit einem Vergleich, insbesondere einer Differenz, von Messgrauwert $S_M$ und Vergleichsgrauwert Sv der Anteil des Bestimmungselementes bestimmt wird.

2. Verfahren nach Anspruch 1, **dadurch gekennzeichnet, dass** eine Kombination zwischen Messgrauwert $S_M$ und den Elementanteilen der Spektroskoskopieelementzusammensetzung mit Rückstreukoeffizienten der Elementanteile erfolgt.

3. Verfahren nach Anspruch 1 oder 2, **dadurch gekennzeichnet, dass** eine oder mehrere Kalibrationsproben mit dem Rückstreuelektronendetektor vermessen sind, um bestimmten Elementen bzw. Elementzusammensetzungen bestimmte Grauwerte zuzuordnen.

4. Verfahren nach einem der Ansprüche 1 bis 3, **dadurch gekennzeichnet, dass** eine mit bzw. aus dem Bestimmungselement gebildete Kalibrationsprobe mit dem Rückstreuelektronendetektor vermessen ist, um dem Bestimmungselement einen Grauwert zuzuordnen.

5. Verfahren nach einem der Ansprüche 1 bis 4, **dadurch gekennzeichnet, dass** der Untersuchungsbereich der Probe mit einem Primärelektronenstrahl beschossen wird und mit einem Rückstreuelektronendetektor vom Untersuchungsbereich rückgestreute Elektronen detektiert werden, um das Rückstreuelektronensignal aufzunehmen, und vom Untersuchungsbereich emittierte Röntgenstrahlen mit einem Röntgenspektroskopiedetektor, wie einem EDX-Detektor, detektiert werden, um die Spektroskopieelementzusammensetzung zu ermitteln.

6. Vorrichtung zur Datenverarbeitung, umfassend Mittel, wie zumindest einen Prozessor, welche angepasst sind, das Verfahren nach einem der Ansprüche 1 bis 5 auszuführen.

7. Vorrichtung nach Anspruch 6, **dadurch gekennzeichnet, dass** die Vorrichtung als Teil eines Elektronenmikroskops ausgebildet ist bzw. an ein solches zur Datenübertragung gekoppelt ist.

8. Computerprogrammprodukt, umfassend Befehle, die bei Ausführung des Computerprogrammproduktes durch einen Computer diesen veranlassen, das Verfahren nach einem der Ansprüche 1 bis 5 auszuführen.

9. Computerlesbares Speichermedium, auf dem das Computerprogrammprodukt nach Anspruch 8 gespeichert ist.

**Claims**

1. A computer-based method for determining an element content of a target element, in particular with a low atomic number, specifically of lithium, in an examination area of a sample bombarded with primary electrons, wherein a backscattered electron signal recorded with a backscattered electron detector, preferably a backscattered electron image, as well as a spectroscopic element composition of the examination area determined using an X-ray spectroscopy detector, such as an EDX detector, are obtained, wherein a measured grey value $S_M$ determined from the backscattered electron signal is combined with element contents of the spectroscopic element composition to determine a content of the target element, **characterized in that** a comparison grey value $S_V$ is calculated with the element contents of the spectroscopic element composition and the content of the target element is determined by comparing, in particular by the difference between, the measured grey value $S_M$ and the comparison grey value $S_V$.

2. The method according to claim 1, **characterized in that** a combination between the measured grey value $S_M$ and the element contents of the spectroscopic element composition takes place with backscatter coefficients of the element contents.

3. The method according to claim 1 or 2, **characterized in that** one or more calibration samples are measured using the backscattered electron detector to assign specific grey values to specific elements or element compositions.

4. The method according to any of claims 1 to 3, **characterized in that** a calibration sample formed with or from the target element is measured using the backscattered electron detector, in order to assign a grey value to the target element.

5. The method according to any one of claims 1 to 4, **characterized in that** the examination area of the sample is bombarded with a primary electron beam and backscattered electrons from the examination area are detected with a backscattered electron detector, in order to record the backscattered electron signal, and X-rays emitted from the examination area are detected using an X-ray spectroscopy detector, such as an EDX detector, in order to determine the spectroscopic element composition.

6. A device for data processing, comprising means, such as at least one processor, which are adapted to execute the method according to any one of claims 1 to 5.

7. The device according to claim 6, **characterized in that** the device is designed as part of an electron microscope or is coupled to a microscope of this kind for data transmission.

8. A computer program product comprising commands which, when executed by a computer, cause the computer to execute the method according to any one of claims 1 to 5.

9. A computer-readable storage medium on which the computer program product according to claim 8 is stored.

**Revendications**

1. Procédé informatisé de détermination d'une partie d'élément d'un élément de détermination, en particulier avec un petit nombre ordinal, en particulier de lithium, d'une zone d'analyse d'un échantillon bombardé avec des électrons primaires, sachant qu'un signal d'électrons rétrodiffusés enregistré avec un détecteur d'électrons rétrodiffusés, de préférence une image d'électrons rétrodiffusés, une composition d'éléments spectroscopiques de la zone d'analyse, déterminée avec un détecteur spectroscopique de rayons X, comme un détecteur de rayons X à dispersion d'énergie (XDE) sont reçus, sachant qu'une valeur de gris de mesure $S_M$ déterminée à partir du signal électronique de rétrodiffusion est combinée avec des parties d'élément de la composition d'élément spectroscopique pour déterminer une partie de l'élément de détermination, **caractérisé en ce qu'**une valeur de gris de comparaison $S_V$ est calculée avec les parties d'élément de la composition d'éléments spectroscopiques et la partie de l'élément de détermination est déterminée avec une comparaison, en particulier une différence, de la valeur de gris de mesure $S_M$ et de la valeur de gris de comparaison $S_V$.

2. Procédé selon la revendication 1, **caractérisé en ce qu'**une combinaison entre la valeur de gris de mesure $S_M$ et les parties d'élément de la composition d'éléments spectroscopiques a lieu avec des coefficients de rétrodiffusion des parties d'élément.

3. Procédé selon la revendication 1 ou 2, **caractérisé en ce qu'**un ou plusieurs échantillons d'étalonnage sont mesurés avec le détecteur d'électrons rétrodiffusés pour attribuer des valeurs de gris déterminée aux éléments déterminés ou aux compositions d'éléments.

4. Procédé selon l'une quelconque des revendications 1 à 3, **caractérisé en ce qu'**un échantillon d'étalonnage formé avec ou à partir de l'élément de détermination est mesuré avec le détecteur d'électrons rétrodiffusés pour attribuer une valeur de gris à l'élément de détermination.

5. Procédé selon l'une quelconque des revendications 1 à 4, **caractérisé en ce que** la zone d'analyse de l'échantillon est bombardée avec un faisceau d'électrons primaires et que des électrons rétrodiffusés par la zone d'analyse sont détectés avec un détecteur d'électrons rétrodiffusés pour enregistrer le signal d'électrons rétrodiffusés et des faisceaux de rayons X déterminés par la zone d'analyse sont détectés avec un détecteur de rayons X, comme un détecteur spectroscopique de rayons X à dispersion d'énergie (XDE), pour déterminer la composition d'éléments spectroscopiques.

6. Dispositif de traitement des données comprenant des moyens, comme au moins un processeur, lequel est adapté pour exécuter le procédé selon l'une quelconque des revendications 1 à 5.

7. Dispositif selon la revendication 6, **caractérisé en ce que** le dispositif est constitué sous la forme d'un microscope électronique ou est couplé à un moyen analogue pour la transmission de données.

8. Progiciel comprenant des ordres, qui lors de l'exécution du progiciel par un ordinateur incitent celui-ci à exécuter le procédé selon l'une quelconque des revendications 1 à 5.

9. Moyen de mémorisation lisible par ordinateur sur lequel le progiciel est mémorisé selon la revendication 8.

Fig. 1

**Fig. 2**

**Fig. 3**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9899185 B1
- US 4476386 A